# EUROPÄISCHE PATENTANMELDUNG

(11) **EP 1 331 206 A2**
(43) Veröffentlichungstag der Anmeldung: **30.07.2003**
(21) Anmeldenummer: 02027883.4
(22) Anmeldetag: 13.12.2002
(51) Int. Cl.: C03B 37/095, C03B 37/08

(54) **Düsenwanne zum Ziehen von Glasfasern**

(30) Priorität: 28.01.2002 DE 10203418
(71) Anmelder: W.C. Heraeus GmbH & Co. KG, 63450 Hanau (DE)
(72) Erfinder: Kock, Wulf, Dr., 63755 Alzenau (DE); Warkentin, Oliver, Dr., 64285 Darmstadt (DE); Lupton, David Francis, Dr., 63571 Gelnhausen (DE)
(74) Vertreter: Kühn, Hans-Christian

(57) **Zusammenfassung**

Die Erfindung betrifft eine Düsenwanne zum Ziehen von Glasfasern und deren Verwendung. Die erfindungsgemäße Düsenwanne ist aus mindestens zwei unterschiedlichen metallischen Werkstoffen der Gruppe Platin, Platin-Iridium-Legierung, Platin-Ruthenium-Legierung und Platin-Rhodium-Legierung gebildet, wobei
a) die Seitenwände aus Platin oder Platin-lridium-Legierung oder Platin-Ruthenium-Legierung oder Platin-Rhodium-Legierung gebildet sind,
b) die Düse(n) aus Platin oder Platin-Rhodium-Legierung gebildet sind,
c) die Stromanschlüsse aus Platin oder Platin-Rhodium-Legierung gebildet sind,
d) die Bodenplatte aus Platin-Iridium-Legierung oder Platin-Ruthenium-Legierung oder Platin-Rhodium-Legierung gebildet ist,
und die Seitenwände und die Bodenplatte, wenn sie aus Platin-Iridium-Legierung oder Platin-Ruthenium-Legierung gebildet sind, zumindest auf ihrer dem Wanneninnenraum abgewandten Seite eine Beschichtung aus Platin oder Platin-Rhodium-Legierung aufweisen.

## Beschreibung

Die Erfindung betrifft eine Düsenwanne zum Ziehen von Glasfasern, wobei die Düsenwanne eine Bodenplatte und Seitenwände aufweist, die einen Wanneninnenraum bilden, wobei auf der dem Wanneninnenraum abgewandten Seite der Seitenwände mindestens zwei Stromanschlüsse angeordnet sind, und wobei die Bodenplatte mindestens eine Bodenöffnung aufweist, die auf ihrer dem Wanneninnenraum abgewandten Seite der Bodenplatte in eine Düse mündet. Weiterhin betrifft die Erfindung Verwendungen dieser Düsenwanne.

Düsenwannen zum Ziehen von Glasfasern aus hochtemperaturbeständigen Edelmetall-Legierungen sind bekannt. Bei einer Düsenwanne handelt es sich um ein Gebilde ähnlich einer Schachtel oder einem Gehäuse, an dessen Bodenwandung Öffnungen vorgesehen sind, wobei jede Öffnung jeweils in eine Düse mündet, über welche die Glasschmelze austritt und zu Einzelfäden ausgezogen wird. Die Düsenwanne ist üblicherweise mit Stromanschlüssen versehen, die den Wandungen der Düsenwanne elektrischen Strom zuführen, so dass diese durch ihren eigenen elektrischen Widerstand erhitzt wird. Um in einzelnen Bereichen der Düsenwanne gezielt Temperaturwerte einstellen zu können, wird üblicherweise die Dicke einzelner Wandungsbereiche variiert, um den Stromanteil, der durch diesen fließt, einzustellen und zu kontrollieren. Dabei weist die Bodenwandung mit den Düsen üblicherweise eine gleichförmige Dicke auf, während die Seitenwände von geringer Dicke sind, um das gewünschte Wärmemuster an der Düsenwanne zu erzielen und die Menge des benötigten Edelmetalls zu reduzieren.

Die DE-OS 24 35 019 offenbart eine Düsenwanne aus Platin, Rhodium oder sonstigen Edelmetallen sowie deren Legierungen, wobei die Seitenwände und der Boden der Düsenwanne aus einem Stück gebildet sind. Weiterhin sind unterschiedliche Verfahren offenbart, Glas zur Bildung kontinuierlicher Glasfäden oder -fasern zu verarbeiten.
Ein solches Verfahren offenbart die Möglichkeit, das Glas in Öfen zu erhitzen, es in einer Läuterungskammer zu läutern und zu sphärischen Körpern oder Kugeln zu formen. Die Glaskugeln werden anschließend einem Speiser bzw. einer Düsenwanne zugeführt, die elektrisch geheizt ist und das Glas auf eine Viskosität aufschmilzt, so dass es über die Düsen zu Fäden ausgezogen werden kann.
Ein weiteres hier offenbartes Verfahren ist das Direktschmelzverfahren, bei welchem ein Glasgemenge in einem Ofen erschmolzen und geläutert wird. Das geschmolzene Glas wird über Kanäle zu einzelnen Düsenwannen gefördert, die durch elektrische Widerstandsheizung erhitzt sind. Durch die Düsen der Düsenwanne werden die Glasfäden ausgezogen.

Die WO 93/16008 offenbart eine Düsenwanne, die aus Platinplatten mit unterschiedlichen Dicken hergestellt ist.

Die DE-OS 27 00 430 offenbart eine Platin-Rhodium-Legierung für Düsenwannen zur Herstellung von Glasfasern, wobei diese Legierung neben Rhodium, Platin und Bor auch Zirkon und/oder Hafnium und/oder Magnesium oder mindestens eines der Elemente Yttrium, Lanthan, Titan, Niob oder Tantal enthält.

Die JP 11172349 ( Derwent-Datenbank-Zusammenfassung ) offenbart eine ternäre Legierung aus Platin, Rhodium und Ruthenium zur Herstellung von Düsenwannen für Glasfaserziehprozesse.

Die US 5,879,427 offenbart eine Anordnung mit einer Düsenwanne zum Ziehen von Glasfasern, wobei die Düsenwanne aus Platin oder einer Platinlegierung gebildet ist.

Die US 5,110,333 beschreibt eine Anordnung mit einer Düsenwanne zum Ziehen von Glasfasern. Die Düsenwanne wird dabei durch keramische Heizeinheiten mit Widerstandsheizelementen beheizt und ist aus Platin oder einer Platinlegierung gebildet.

Die US 5,749,933 offenbart eine Vorrichtung zum Ziehen von Glasfasern sowie die Verwendung von Platin-Rhodium-Legierungen für Düsenwannen. Für eine unterhalb der Bodenwandung der Düsenwanne angeordnete Kühleinrichtung ist die Verwendung einer Palladiumlridium-Legierung oder einer Palladium-Nickel-Legierung offenbart.

Aus dem Artikel "New Platinum Materials for High Temperature Applications" ("Advanced Engineering Materials", 2001, 3, No. 10, Seite 811 - 820, von B. Fischer ) ist die Verwendung von oxiddispersionsgehärteten Platinlegierungen für Düsenwannen bekannt. Dabei werden als Materialien reines, oxiddispersionsgehärtetes Platin sowie oxiddispersionsgehärtete Legierungen aus Platin und Rhodium sowie Platin und Gold offenbart.

Der Artikel "High Temperature Mechanical Properties of the Platinum Group Metals" ( Platin Metals Rev., 1999, 32, (1), Seiten 18 - 28, von B. Fischer, A. Behrends, D. Freund, D. Lupton und J. Merker ) offenbart die Verwendung von Platin oder Platinlegierungen für Düsenwannen beim Glasfaserziehprozess. Hier werden die Kriechbeständigkeiten unterschiedlicher Platinlegierungen wie Platin-Iridium, Platin-Rhodium und Platin-Gold untersucht, wobei einige dieser Legierungen oxiddispersionsgehärtet sind.

Der Artikel "Finite element modelling of strains and stresses in platinum alloy bushings for textile glass fibre production" ( Glass Science and Technology, Glastechnische Berichte, Issue 5/2001, Vol. 74, von R. Völkl, B. Fischer, R. Teschner und D. Lupton ) offenbart Untersuchungen zu Dehnungen und Spannungen in Düsenwannen aus Platinlegierungen zur Herstellung textiler Glasfasern. Dabei wurde insbesondere eine oxiddispersionsgehärtete Platinlegierung mit 10 % Rhodium der Firma W. C. Heraeus, Hanau ( Deutschland ), betrachtet.

Bei den bekannten Düsenwannen ist insbesondere die mechanische Steifigkeit der Bodenplatte von außerordentlicher Wichtigkeit, da der Faserziehprozess nur dann effektiv und qualitativ gleichmäßig erfolgen kann, wenn die Bodenplatte eben und waagerecht ist. Aufgrund der erheblichen mechanischen und thermischen Belastung der Bodenplatte neigt diese im Laufe des Faserziehprozesses zu einer Verformung durch Kriechen. Diese Verformung ist unter normalen Glasfaserziehbedingungen die häufigste Ursache für einen Betriebsausfall von Düsenwannen. Um die Durchbiegung der Bodenplatte zu reduzieren beziehungsweise so lange wie möglich zu verhindern, sind diverse konstruktive Möglichkeiten wie zum Beispiel das Anbringen von Verstrebungen an beziehungsweise in der Düsenwanne bekannt. Durch diese kann ein Teil der mechanischen Belastung auf einen Zwischenboden beziehungsweise eine Lochplatte übertragen werden, die oberhalb der Bodenplatte angeordnet ist.

Die Erfindung stellt sich die Aufgabe, die Kriechfestigkeit der Bodenplatte zu erhöhen und gleichzeitig eine hohe chemische Beständigkeit der Düsenwanne sicherzustellen. Weiterhin soll die Düsenwanne in ihrer Gesamtheit aus möglichst wenigen unterschiedlichen Edelmetallen gebildet sein, so dass eine einfache Raffination der Düsenwanne nach deren Einsatz möglich ist. Des weiteren sollen Verwendungen solcher Düsenwannen angegeben werden.

Die Aufgabe wird für die Düsenwanne dadurch gelöst, dass die Düsenwanne aus mindestens zwei unterschiedlichen metallischen Werkstoffen der Gruppe Platin, Platin-lridium-Legierung, Platin-Ruthenium-Legierung und Platin-Rhodium-Legierung gebildet ist, wobei
a) die Seitenwände aus Platin oder Platin-lridium-Legierung oder Platin-Ruthenium-Legierung oder Platin-Rhodium-Legierung gebildet sind,
b) die Düse(n) aus Platin oder Platin-Rhodium-Legierung gebildet sind,
c) die Stromanschlüsse aus Platin oder Platin-Rhodium-Legierung gebildet sind,
d) die Bodenplatte aus Platin-lridium-Legierung oder Platin-Ruthenium-Legierung oder Platin-Rhodium-Legierung gebildet ist,
und dass die Seitenwände und die Bodenplatte, wenn sie aus Platin-lridium-Legierung oder Platin-Ruthenium-Legierung gebildet sind, zumindest auf ihrer dem Wanneninnenraum abgewandten Seite eine Beschichtung aus Platin oder Platin-Rhodium-Legierung aufweisen.

Die erfindungsgemäße Düsenwanne hat einmal den Vorteil, dass durch die Verwendung unterschiedlicher Werkstoffe die Wanne partiell an den Stellen verstärkt werden kann, die mechanisch besonders stark belastet werden. Dies ist vor allem die Bodenplatte.
Weiterhin können die Wandstärken der Düsenwanne je nach Kriechbeständigkeit und spezifischem elektrischem Widerstand des gewählten Werkstoffes minimiert werden. Der Einsatz eines Werkstoffes mit einem höheren spezifischen elektrischen Widerstand führt zu einer Erhöhung der Spannung in diesem Wannenbereich und zu einem geringeren Strombedarf zur Beheizung der Düsenwanne ( Ohmsches Gesetz ). Aufgrund des geringeren Strombedarfs kann die Einspeisung des Stromes in die Wandungen der Düsenwanne über einen geringeren Querschnitt der Stromanschlüsse erreicht werden. Aufgrund der möglichen Minimierung der Wandstärken können die Edelmetallkosten für eine erfindungsgemäße Düsenwanne vorteilhafter Weise gesenkt werden. Die Stromanschlüsse an den Seitenwänden der Düsenwanne sind zur Einspeisung des Heizstromes vorgesehen.

Für die erfindungsgemäße Düsenwanne hat es sich bewährt, wenn auf der der Bodenplatte gegenüber liegenden Seite der Düsenwanne eine den offenen Querschnitt der Düsenwanne vollständig überdeckende Lochplatte angeordnet ist, die mindestens eine Plattenöffnung aufweist, und dass die Lochplatte aus Platin, Platin-lridium-Legierung, Platin-Ruthenium-Legierung oder Platin-Rhodium-Legierung gebildet ist.

Besonders bevorzugt sind Ausführungen der Düsenwanne, bei denen insgesamt nur zwei unterschiedliche Edelmetalle in den verwendeten Werkstoffen enthalten sind, da diese besonders wirtschaftlich und kostengünstig raffiniert beziehungsweise recycelt werden können. Eventuell vorhandene oxidkeramische Bestandteile in den verwendeten Werkstoffen stören die Raffination nicht.
Bei einer solchen bevorzugten Düsenwanne sind die Seitenwände, die Stromanschlüsse und die Düse(n) aus Platin gebildet, die Bodenplatte ist aus Platin-lridium-Legierung oder Platin-Ruthenium-Legierung gebildet und die Beschichtung der Bodenplatte ist aus Platin gebildet.

Bei einer weiteren bevorzugten Düsenwanne sind die Seitenwände, die Stromanschlüsse und die Düse(n) aus Platin gebildet, die Bodenplatte und die Lochplatte aus Platin-lridium-Legierung gebildet und die Beschichtung der Bodenplatte ist aus Platin gebildet.

Bei einer weiteren bevorzugten Düsenwanne sind die Seitenwände, die Stromanschlüsse und die Düse(n) aus Platin gebildet, die Bodenplatte und die Lochplatte aus Platin-Ruthenium-Legierung gebildet und die Beschichtung der Bodenplatte ist aus Platin gebildet.

Bei einer weiteren bevorzugten Düsenwanne sind die Stromanschlüsse aus Platin gebildet und die Seitenwände, die Düse(n), die Bodenplatte und die Lochplatte aus Platin-Rhodium-Legierung gebildet.

Für manche Glasschmelzen kann es jedoch erforderlich sein, das Benetzungsverhalten der Düse(n) zu verändern. Hier tritt der Recycling-Gedanke gegenüber der Funktionsfähigkeit der Düsenwanne zurück und es werden insgesamt mehr als zwei unterschiedliche Edelmetalle eingesetzt.
Bei einer in diesem Fall bevorzugten Düsenwanne sind die Seitenwände aus Platin oder Platin-Rhodium-Legierung gebildet, die Düse(n) aus Platin-Rhodium-Legierung gebildet, die Bodenplatte aus Platin-Iridium-Legierung oder Platin-Ruthenium-Legierung gebildet und die Beschichtung der Bodenplatte ist aus Platin oder Platin-Rhodium-Legierung gebildet.

Bei einer weiteren hier bevorzugten Düsenwanne sind die Seitenwände aus Platin oder Platin-Rhodium-Legierung gebildet, die Düse(n) aus Platin-Rhodium-Legierung gebildet, die Bodenplatte und die Lochplatte aus Platin-lridium-Legierung gebildet und die Beschichtung der Bodenplatte ist aus Platin oder Platin-Rhodium-Legierung gebildet.

Bei einer weiteren bevorzugten Düsenwanne sind die Seitenwände aus Platin oder Platin-Rhodium-Legierung gebildet, die Düse(n) aus Platin-Rhodium-Legierung gebildet, die Bodenplatte und die Lochplatte aus Platin-Ruthenium-Legierung gebildet und die Beschichtung der Bodenplatte ist aus Platin oder Platin-Rhodium-Legierung gebildet.

Die Auswahl einer Platin-Iridium-Legierung oder einer Platin-Ruthenium-Legierung im Bereich der Boden- und/oder der Lochplatte ist optimal und erhöht die Steifigkeit genau in den kritisch belasteten Bereichen der Düsenwanne partiell, nachdem diese Legierungen höhere Kriechbeständigkeiten aufweisen als unlegiertes Platin.

Vorteilhaft ist weiterhin, dass die Platin-Iridium-Legierungen beziehungsweise die Platin-Ruthenium-Legierungen einen höheren spezifischen elektrischen Widerstand aufweisen, als Platin beziehungsweise oxiddispersionsgehärtetes Platin ( siehe Tabelle 1 ). Dadurch kann bei günstiger Kombination und Auswahl der Materialien für die Düsenwanne die Verteilung des Heizstromes in der Düsenwanne in erheblichem Maße gesteuert und vergleichmäßigt werden. Insbesondere die Komponenten der Düsenwanne, die einen erheblichen Beitrag zur gesamten Wärmeleistung der Düsenwanne liefern müssen wie die Bodenplatte und gegebenenfalls die Lochplatte, werden daher bevorzugt aus einer ( wo notwendig mit Platin beschichteten ) Platinlridium- oder einer Platin-Ruthenium-Legierung gebildet.

**Tabelle 1:**

| Vergleich spez. elektr. Widerstände von Platin, Platin-Iridium-, Platin-Ruthenium- oder Platin-Rhodium-Legierungen | | |
|---|---|---|
| Material | spez. elektrischer Widerstand in Ω·mm²/m | |
| | bei Raumtemperatur | bei 1250°C |
| Platin ( technische Reinheit ) | 0,107 | ca. 0,45 |
| Platin, oxiddispersionsgehärtet ( Typ: Pt DPH, Firma W.C. Heraeus GmbH) | 0,11 | -- |
| PtIr20 | 0,31 | -- |
| PtIr30 | 0,34 | ca. 0,64 |
| PtRu5 | 0,33 | -- |
| PtRu10 | 0,42 | -- |
| PtRh10 | 0,20 | ca. 0,53 |
| PtRh20 | 0,21 | -- |

Die zumindest teilweise Beschichtung der Platin-lridium-Legierung oder der Platin-Ruthenium-Legierung mit Platin oder Platin-Rhodium-Legierung ermöglicht es, die jeweilige Legierung vor einer Sauerstoff enthaltenden Gasatmosphäre zu schützen. Unbeschichtete Zonen sollen nur in Kontakt zu Glasschmelze oder zu Platin oder Platin-Rhodium-Legierung stehen, um zu verhindern, dass Iridium beziehungsweise Ruthenium oxidiert und abdampft. Das würde zu einer Porenbildung im Legierungsmaterial führen, durch welche eine Schwächung der Festigkeit und der Kriechbeständigkeit des Materials eintritt.

Für manche Anwendungsfälle ist es von Vorteil, wenn zwischen der Beschichtung und der Platin-lridium-Legierung oder der Platin-Ruthenium-Legierung eine oxidkeramische Zwischenschicht angeordnet ist, die eine Diffusion von Iridium beziehungsweise Ruthenium durch die Beschichtung verhindert. Dabei kann die oxidkeramische Zwischenschicht porös oder dicht sein, da sie lediglich als Abstandshalter zwischen der Platin-Iridium- beziehungsweise Platin-Ruthenium-Legierung und der Beschichtung fungieren soll.

Besonders vorteilhaft ist es, wenn das verwendete Platin und/oder die Platin-Iridium-Legierung und/oder die Platin-Ruthenium-Legierung und/oder die Platin-Rhodium-Legierung oxiddispersionsgehärtet ist. Dadurch ist die Kriechbeständigkeit der Materialien weiter erhöht. Besonders bewährt hat sich die Ausbildung der Stromanschlüsse für eine erfindungsgemäße Düsenwanne aus oxiddispersionsgehärtetem Platin. Zum Thema der Oxiddispersionshärtung wird hier insbesondere auf die Patentschrift DE 198 13 988 C1und den dort genannten Stand der Technik verwiesen.

Es hat sich bewährt, wenn die Seitenwände der Düsenwanne an ihrem der Bodenplatte entgegengesetzen Ende einen um die Düsenwanne umlaufenden Flansch aufweisen. Dieser ist vorzugsweise aus Platin, Platin-lridium-Legierung, Platin-Ruthenium-Legierung oder Platin-Rhodium-Legierung gebildet. Der Flansch weist, wenn er aus Platin-lridium-Legierung oder Platin-Ruthenium-Legierung gebildet ist, eine Beschichtung aus Platin oder Platin-Rhodium-Legierung auf.
Besonders vorteilhaft ist es, wenn der Flansch oxiddispersionsgehärtet ist. Vorzugsweise wird der Flansch aus dem gleichen Werkstoff gebildet, wie die Seitenwände.

Weiterhin hat es sich bewährt, wenn die Düsenwanne einen rechteckigen Querschnitt mit vier Seitenwänden aufweist.

Für eine rechteckige Düsenwanne hat es sich dabei bewährt, an zwei sich gegenüber liegenden Seitenwänden der vier Seitenwände jeweils mindestens einen Stromanschluss anzuordnen. Besonders vorteilhaft ist auch hier die Ausbildung der Stromanschlüsse aus oxiddispersionsgehärtetem Platin.

Für rechteckige Düsenwannen ist es zudem vorteilhaft, wenn die zwei sich gegenüber liegenden Seitenwände der vier Seitenwände, an welchen die Stromanschlüsse angeordnet sind, aus oxiddispersionsgehärtetem Platin gebildet sind.

Für einige Glasfaserziehverfahren hat es sich bewährt, wenn die Düsenwanne an ihrer der Bodenplatte gegenüber liegenden Seite einen Behälter aufweist, wobei ein Behälterinnenraum mit dem Wanneninnenraum in Verbindung steht.

Zur Stabilisierung der Düsenwanne hat es sich bewährt, dass im Behälterinnenraum mindestens ein Behälter-Versteifungselement zur Stabilisierung der Geometrie des Behälters angeordnet ist. Dabei ist es von Vorteil, wenn das mindestens eine Behälter-Versteifungselement aus Platin, Platin-Rhodium-Legierung, Platin-lridium-Legierung, Platin-lridium-Legierung inklusive einer Beschichtung aus Platin, Platin-lridium-Legierung inklusive einer Beschichtung aus Platin-Rhodium-Legierung, Platin-Ruthenium-Legierung, Platin-Ruthenium-Legierung inklusive einer Beschichtung aus Platin oder aus einer Platin-Ruthenium-Legierung inklusive einer Beschichtung aus Platin-Rhodium-Legierung gebildet ist. Die Wahl des Materials hängt einerseits davon ab, ob das Behälter-Versteifungselement mit Glasschmelze bedeckt ist oder nicht und andererseits davon, welche Gasatmosphäre im Behälter herrscht. Ist das Behälter-Versteifungselement nicht oder teilweise nicht von Glasschmelze bedeckt und ist die Gasatmosphäre beispielsweise Luft, so sollte als Material Platin, eine Platin-Rhodium-Legierung, eine Platin-lridium-Legierung inklusive einer Beschichtung oder eine Platin-Ruthenium-Legierung inklusive einer Beschichtung gewählt werden, um ein Abdampfen von Iridium oder Ruthenium zu vermeiden. Ist das Behälter-Versteifungselement dagegen komplett von Glasschmelze bedeckt oder ist es teilweise oder nicht von Glasschmelze bedeckt und enthält die Gasatmosphäre gleichzeitig keinen Sauerstoff, so kann als Material auch eine Platin-lridium-Legierung ohne Beschichtung oder eine Platin-Ruthenium-Legierung ohne Beschichtung gewählt werden.

Für manche Anwendungsfälle ist es auch hier von Vorteil, wenn zwischen der Beschichtung und der Platin-lridium-Legierung oder der Platin-Ruthenium-Legierung eine oxidkeramische Zwischenschicht angeordnet ist, die- wie bereits oben beschrieben - eine Diffusion von Iridium beziehungsweise Ruthenium durch die Beschichtung behindert.

Zudem ist es vorteilhaft, im Wanneninnenraum mindestens ein Wannen-Versteifungselement zur Stabilisierung der Geometrie der Düsenwanne anzuordnen. Dabei hat es sich insbesondere bewährt, das mindestens eine Wannen-Versteifungselement Platin, Platin-Rhodium-Legierung, Platin-lridium-Legierung, Platin-Iridium-Legierung inklusive einer Beschichtung aus Platin, Platin-Iridium-Legierung inklusive einer Beschichtung aus Platin-Rhodium-Legierung, Platin-Ruthenium-Legierung, Platin-Ruthenium-Legierung inklusive einer Beschichtung aus Platin oder aus Platin-Ruthenium-Legierung inklusive einer Beschichtung aus Platin-Rhodium-Legierung zu bilden. Die Auswahl der Materialien erfolgt hier analog zur Auswahl der Materialien für Behälter-Versteifungselemente.

Für manche Anwendungsfälle ist es auch hier von Vorteil, wenn zwischen der Beschichtung und der Platin-Iridium-Legierung oder der Platin-Ruthenium-Legierung eine oxidkeramische Zwischenschicht angeordnet ist, die - wie bereits oben beschrieben - eine Diffusion von Iridium beziehungsweise Ruthenium durch die Beschichtung verhindert.

Dabei ist es insbesondere zur Erhöhung der geometrischen Stabilität der Düsenwanne von Vorteil, die Materialien für die Versteifungselemente aus oxiddispersionsgehärtetem Material zu wählen.

Es hat sich weiterhin bewährt, wenn die Bodenplatte 400 bis 6000 Bodenöffnungen aufweist, die jeweils in eine Düse münden.

Als besonders kriechbeständige Platin-lridium-Legierungen haben sich Ptlr20 oder Ptlr30 bewährt. Als besonders kriechbeständige Platin-Ruthenium-Legierungen haben sich PtRu5 oder PtRu10 bewährt ( siehe "High Temperature Mechanical Properties of the Platinum Group Metals", Platin Metals Rev., 1999, 32, (1), Seiten 18 - 28, von B. Fischer, A. Behrends, D. Freund, D. Lupton und J. Merker ). Als besonders kriechbeständige Platin-Rhodium-Legierungen haben sich PtRh10 oder PtRh20 oder PtRh24 bewährt.

Es hat sich bewährt, wenn an dem Behälter ein Gaszuführstutzen angeordnet ist, der vorzugsweise aus dem gleichen Material wie der Behälter gebildet ist. Über diesen Gaszuführstutzen kann der Behälterinnenraum mit Inertgas befüllt werden. Somit können unbeschichtete Bauteile aus Platin-lridium-Legierung oder Platin-Ruthenium-Legierung direkt in dieser inerten Gasatmosphäre eingesetzt werden, ohne dass eine Gefahr der Oxidation oder Abdampfung des Iridiums oder Rutheniums besteht.

Die Beschichtung auf der Platin-lridium-Legierung oder der Platin-Ruthenium-Legierung ist vorzugsweise durch Walzplattieren mit einem Blech, Diffusionsschweißen eines Bleches, Punktschweißen eines Bleches, thermisches Spritzen oder galvanische Abscheidung gebildet. Für das Punktschweißen hat sich der Einsatz eines strukturierten Bleches bewährt, das beispielsweise warzenförmige Erhebungen aufweist, über die die Punktschweißung durchgeführt wird. Durch die in diesem Fall nicht vollfächige Verbindung zwischen Platin-Iridium- oder Platin-Ruthenium-Legierung und Beschichtung wird die Diffusion von Iridium oder Ruthenium durch die Beschichtung behindert.

Ist zwischen der Platin-lridium-Legierung beziehungsweise der Platin-Ruthenium-Legierung und der Beschichtung aus Platin eine oxidkeramische Zwischenschicht angeordnet, so wird die Beschichtung vorzugsweise durch thermisches Spritzen oder Anbringen eines Bleches gebildet.

Sowohl mit als auch ohne keramische Zwischenschicht ist es bevorzugt, die Beschichtung der Bodenplatte durch ein Blech zu bilden, wobei dieses auf der dem Wanneninneren abgewandten Seite der Bodenplatte zumindest mit dem Umfang der Düse(n) gasdicht verbunden ist.

Es ist beim Einsatz oxidkeramischer Zwischenschichten mit einer Beschichtung aus Blech an Boden- oder Lochplatte sowie Versteifungselementen von Vorteil, wenn der Raum zwischen der Platin-lridium-Legierung oder der Platin-Ruthenium-Legierung und dem Blech evakuiert ist. Dadurch wird einerseits ein "Durchhängen" des Bleches vermieden und ein inniger Kontakt zwischen Blech und Zwischenschicht gewährleistet. Andererseits wird ein Transport von Iridium oder Ruthenium über eine Gasphase in Richtung der Beschichtung ausgeschlossen.

Es hat sich bewährt, wenn das Blech für die Beschichtung eine Dicke im Bereich von 0,1 bis 0,5 mm aufweist. Für die oxidkeramische Zwischenschicht genügt eine geringe Dicke im Bereich von vorzugsweise 10 bis 100 µm, da sie lediglich als Abstandshalter dient.

Als Materialien für die oxidkeramische Zwischenschicht haben sich insbesondere ZrO₂ und/oder Al₂O₃ und/oder Y₂O₃ bewährt.

Die oxidkeramische Zwischenschicht kann einerseits ein selbsttragendes Bauteil sein, wie beispielsweise ein Keramikplättchen, ein Keramiknetz, eine keramische Fasermatte oder eine Keramikfolie.

Andererseits kann die oxidkeramische Zwischenschicht durch Aufdampfen, Aufsputtern, thermisches Spritzen oder den Auftrag einer keramischen Schlichte gebildet sein. Dabei kann die Zwischenschicht auf die Platin-Iridium- oder die Platin-Ruthenium-Legierung aufgebracht sein oder auf einer als Blech ausgebildeten Beschichtung angeordnet sein.

Eine Verwendung der erfindungsgemäßen Düsenwannen, die ohne oxidkeramische Zwischenschichten ausgeführt sind, zum Ziehen von Glasfasern bei einer Temperatur der Düsenwanne von ≤ 1250°C ist optimal, da hier die Diffusion von Iridium beziehungsweise Ruthenium noch so langsam ist, dass eine Beeinträchtigung der Lebensdauer der Düsenwanne davon unbeeinflusst bleibt.

Eine Verwendung der erfindungsgemäßen Düsenwannen, die mit oxidkeramischer Zwischenschicht ausgeführt sind, zum Ziehen von Glasfasern bei einer Temperatur der Düsenwanne von > 1250°C ist optimal, da hier die Diffusion von Iridium beziehungsweise Ruthenium bereits so hoch ist, dass ohne oxidkeramische Zwischenschicht eine Beeinträchtigung der Lebensdauer der Düsenwanne auftreten würde.

Eine Verwendung einer Düsenwanne ohne Behälter für ein Direktschmelzverfahren zum Ziehen von Glasfasern, bei welchem eine Glasschmelze in die Düsenwanne geleitet wird, die Viskosität der Glasschmelze in der Düsenwanne mittels einer elektrischen Widerstandsbeheizung der Düsenwanne kontrolliert und eingestellt wird, die Glasschmelze durch die Düse(n) tritt und zu Glasfaser gezogen wird, ist optimal.

Außerdem hat sich eine Verwendung einer Düsenwanne mit Behälter für ein Indirektschmelzverfahren zum Ziehen von Glasfasern, bei welchem eine Glasschmelze zu einem Glasgranulat verarbeitet wird, das Glasgranulat in den Behälterinnenraum gefüllt und dem Wanneninnenraum zugeführt wird, das Glasgranulat mittels einer elektrischen Widerstandsbeheizung der Düsenwanne erschmolzen und die Viskosität der Glasschmelze kontrolliert und eingestellt wird, die Glasschmelze durch die Düse(n) tritt und zu Glasfaser gezogen wird, bewährt.

Die Figurendarstellungen 1 bis 10 und die Beispiele 1 bis 4 sollen die Erfindung beispielhaft erläutern. So zeigt
Figur 1 eine Düsenwanne mit rechteckigem Querschnitt in einer Seitenansicht;
Figur 2 die Düsenwanne aus Figur 1 in der Draufsicht;
Figur 3 die Düsenwanne 1 aus Figur 1 von unten;
Figur 4 die Düsenwanne 1 in einer Seitenansicht;
Figur 5 den Schnitt A - A' durch die Düsenwanne 1 aus Figur 1;
Figur 6 den Schnitt B - B' durch die Düsenwanne 1 aus Figur 3;
Figur 7 eine mögliche Ausgestaltung einer Bodenplatte 5 gemäß dem Ausschnitt C aus Figur 5;
Figur 8 eine weitere mögliche Ausgestaltung einer Bodenplatte 5 gemäß dem Ausschnitt C aus Figur 5;
Figur 9 eine Glasfaserziehmaschine für ein Indirektschmelzverfahren;
Figur 10 die Düsenwanne inklusive Aufhängung aus Figur 9 im Querschnitt.

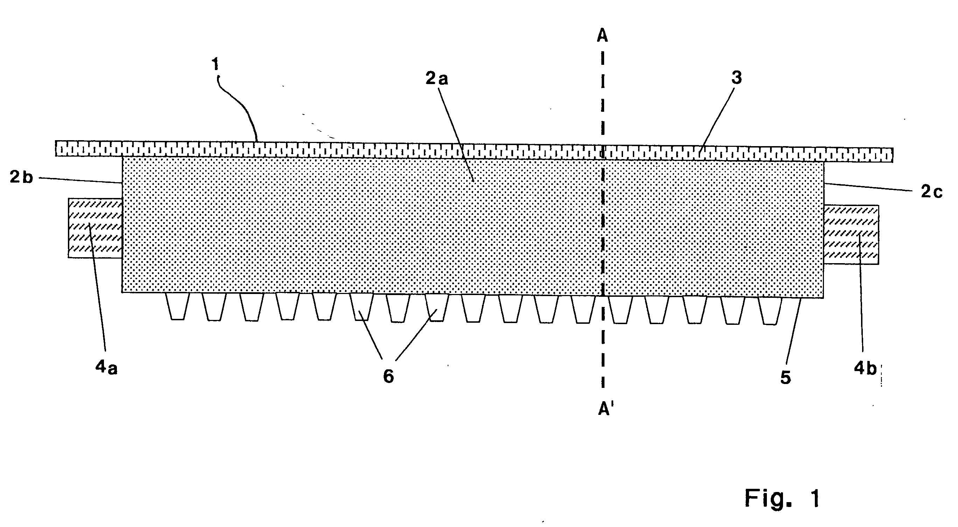

Figur 1 zeigt eine Düsenwanne 1 mit einem rechteckigen Querschnitt in einer Seitenansicht. Dabei sind die Seitenwände 2a, 2b, 2c und ein Flansch 3 erkennbar. An der Seitenwand 2b ist ein Stromanschluss 4a angeordnet. An der Seitenwand 2c, die der Seitenwand 2b gegenüber liegt, ist ein weiterer Stromanschluss 4b angeordnet. An der Bodenplatte 5 sind Düsen 6 erkennbar.

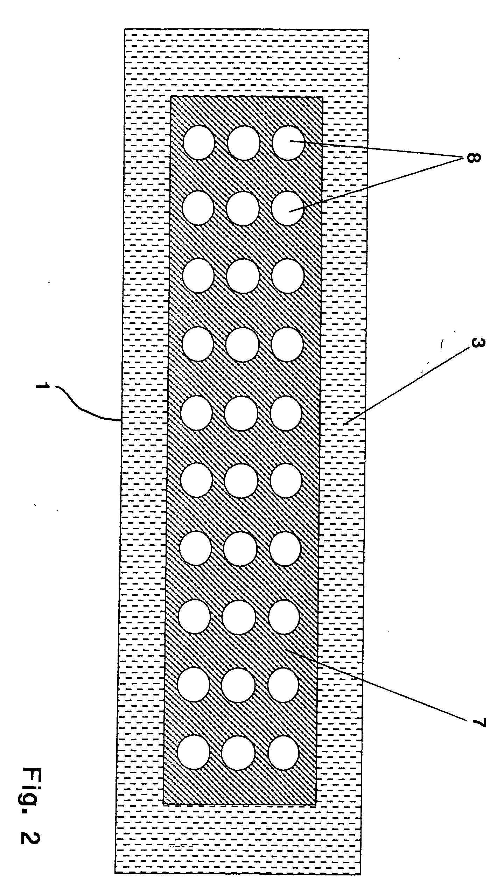

Figur 2 zeigt die Düsenwanne 1 aus Figur 1 in der Draufsicht, wobei der Flansch 3 und eine Lochplatte 7 mit Plattenöffnungen 8 erkennbar ist.

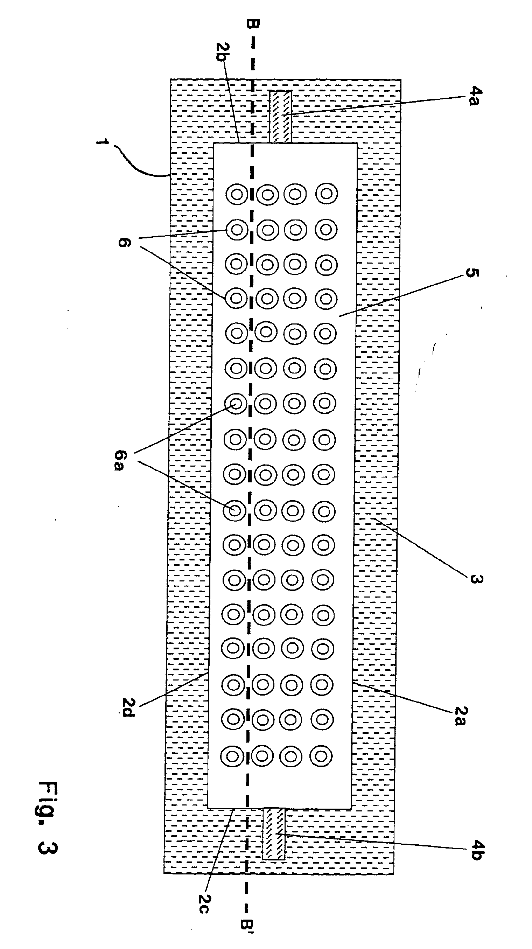

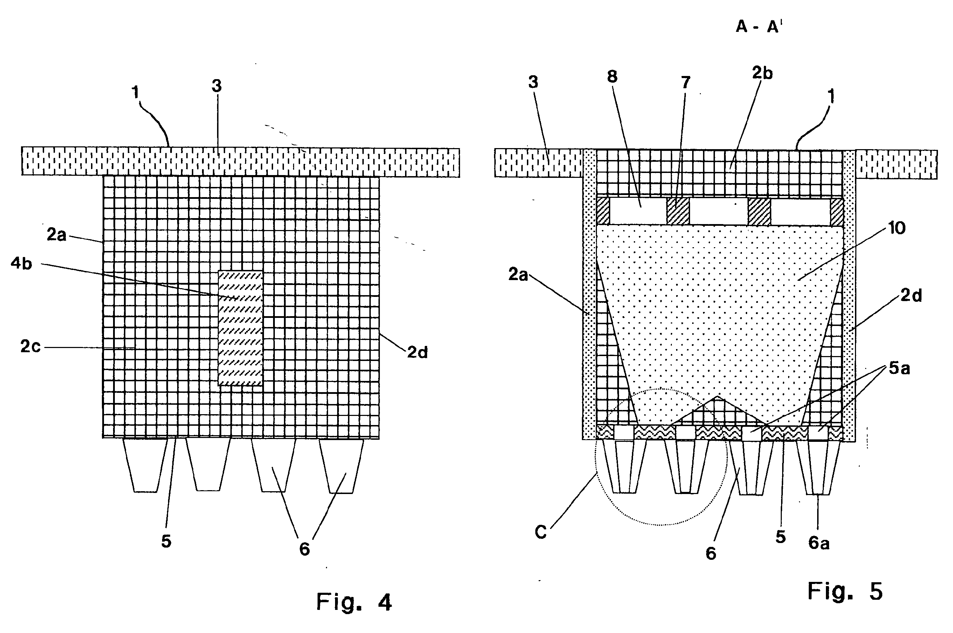

Figur 3 zeigt die Düsenwanne 1 aus Figur 1 von unten, wobei der Flansch 3, die Seitenwände 2a, 2b, 2c, 2d und die Stromanschlüsse 4a, 4b erkennbar sind. Die Düsen 6 an der Bodenplatte 5 weisen Düsenöffnungen 6a auf, die an Bodenöffnungen ( siehe Figuren 5, 7 oder 8, Bezugszeichen 5a ) in der Bodenplatte 5 anschließen oder wobei die Düsen 6 in diese eingesetzt sind.

Figur 4 zeigt die Düsenwanne 1 in einer Seitenansicht mit Seitenwänden 2a, 2c, 2d, dem Flansch 3 und Bodenplatte 5. Die Düsen 6 und der Stromanschluss 4b sind ebenfalls dargestellt.

Figur 5 zeigt den Schnitt A - A' durch die Düsenwanne 1 aus Figur 1. Dabei sind die Seitenwände 2a, 2b, 2d, der Flansch 3 und die Bodenplatte 5 mit Bodenöffnungen 5a dargestellt. Weiterhin sind die Düsen 6 mit Düsenöffnungen 6a und die Lochplatte 7 mit Plattenöffnungen 8 erkennbar. Im Wanneninnenraum befindet sich ein Wannen-Versteifungselement 10.

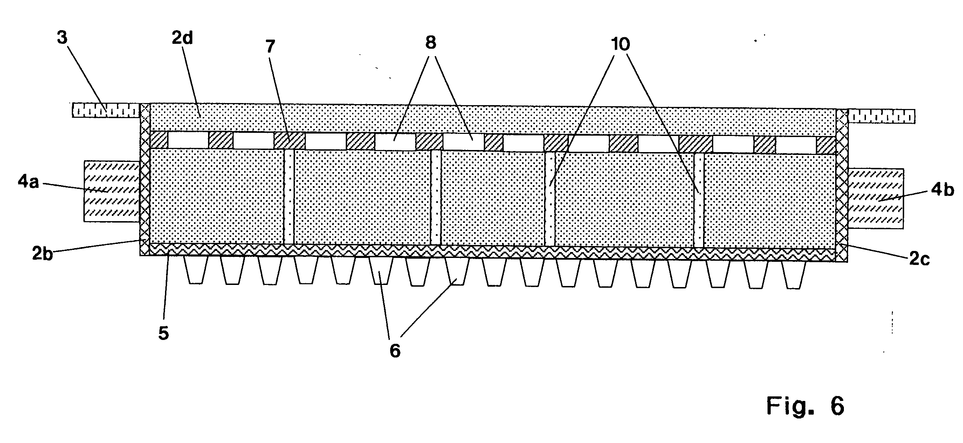

Figur 6 zeigt den Schnitt B - B' durch die Düsenwanne 1 aus Figur 3, wobei mehrere Wannen-Versteifungselemente 10 erkennbar sind.

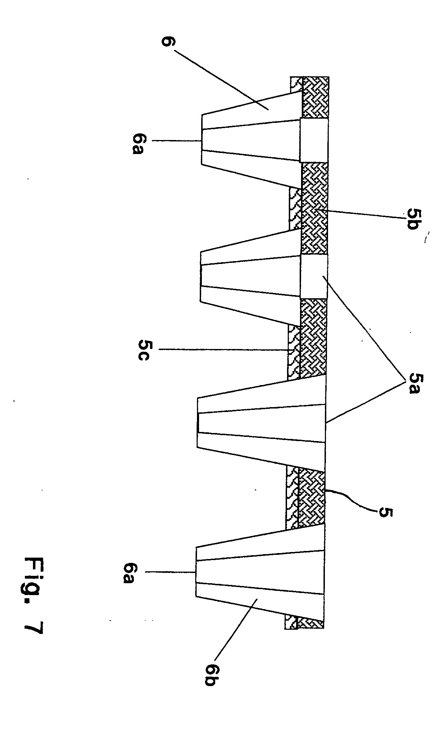

Figur 7 zeigt eine mögliche Ausgestaltung einer Bodenplatte 5 gemäß dem Ausschnitt C aus Figur 5. Dabei setzt sich die Bodenplatte 5 aus einer Platte 5b aus Platin-Iridium- oder Platin-Ruthenium-Legierung und einer Beschichtung 5c aus Platin zusammen. Es wurden hier zwei unterschiedliche Arten der Befestigung von Düsen 6, 6b dargestellt. Die Düsen 6 sind stumpf auf der Platte 5b befestigt und an ihrem maximalen Außendurchmesser mit der Beschichtung 5c verschweißt, so dass die Düsenöffnung 6a direkt an die Plattenöffnung 5a anschließt. Die Düsen 6b sind so in die Plattenöffnungen 5a eingesetzt, dass ihr maximaler Außendurchmesser mit der dem Wanneninnenraum der Düsenwanne zuwandten Seite der Bodenplatte 5 abschließt. Diese Ausführung der Bodenplatte 5 ist bis zu einer Temperatur von 1250°C einsetzbar.

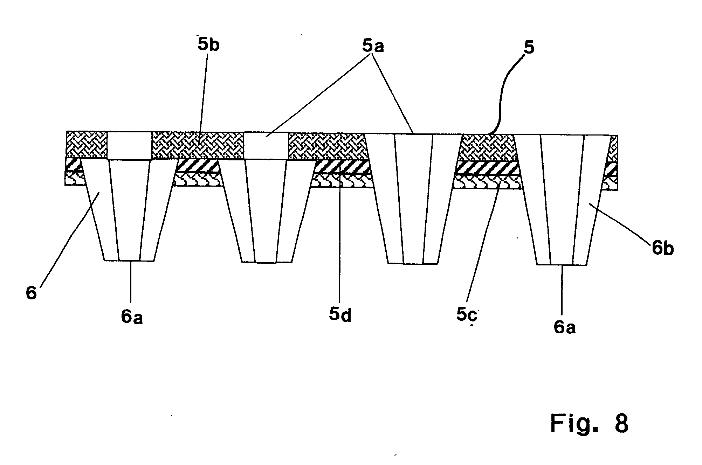

Figur 8 zeigt eine weitere mögliche Ausgestaltung einer Bodenplatte 5 gemäß dem Ausschnitt C aus Figur 5. Dabei setzt sich die Bodenplatte 5 aus einer Platte 5b aus Platin-Iridium- oder Platin-Ruthenium-Legierung, einer Beschichtung 5c aus Platin sowie einer oxidischen Zwischenschicht 5d zwischen der Platte 5b und der Beschichtung 5c zusammen. Auch hier wurden zwei unterschiedliche Arten der Befestigung von Düsen 6, 6b dargestellt. Die Düsen 6 sind stumpf auf der Platte 5b befestigt und an ihrem Außendurchmesser unterhalb der Zwischenschicht 5d mit der Beschichtung 5c verschweißt, so dass die Düsenöffnung 6a direkt an die Plattenöffnung 5a anschließt. Die Düsen 6b sind so in die Plattenöffnungen 5a eingesetzt und mit der Platte 5b verbunden, dass ihr maximaler Außendurchmesser mit der dem Wanneninnenraum der Düsenwanne zuwandten Seite der Bodenplatte 5 abschließt. Der Außendurchmesser der Düsen 6b ist unterhalb der Zwischenschicht 5d mit der Beschichtung 5c verschweißt. Diese Ausführung der Bodenplatte 5 wird idealerweise bei Temperaturen > 1250°C eingesetzt.

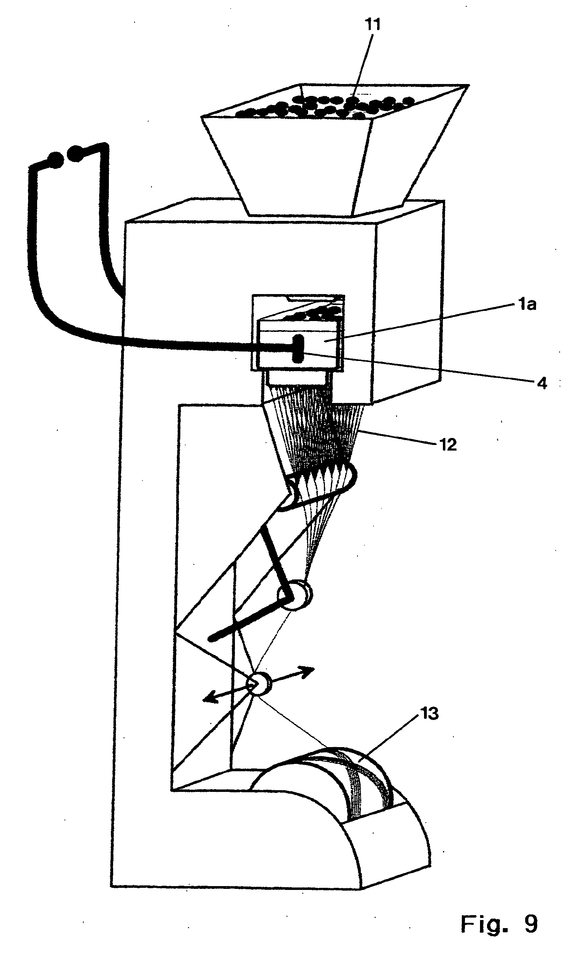

Figur 9 zeigt eine Glasfaserziehmaschine für ein Indirektschmelzverfahren. Dabei wird Glasgranulat 11 einer Düsenwanne 1 a zugeführt, die mit Stromanschlüssen 4 versehen ist. Die aus den Düsen der Düsenwanne 1a gezogenen Glasfasern 12 werden versponnen und auf eine Rolle 13 gewickelt.

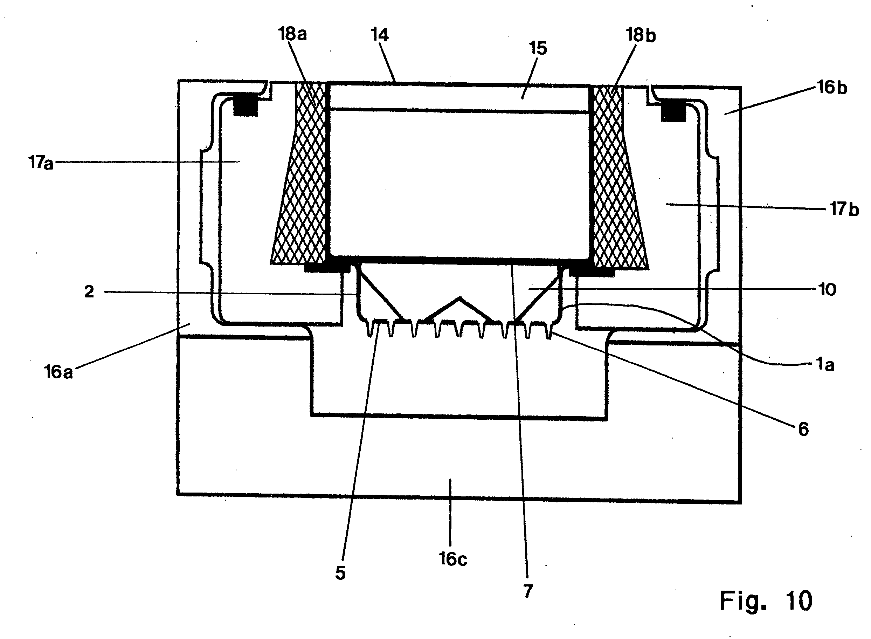

Figur 10 zeigt die Düsenwanne 1a aus Figur 9 im Querschnitt. Im Wanneninnenraum der Düsenwanne 1a ist ein Wannen-Versteifungselement 10 erkennbar. An der der Bodenplatte 5 gegenüberliegenden Seite der Seitenwände 2 ist die Lochplatte 7 und darüber ein Behälter 14 angeordnet, der im Behälterinnenraum ein Behälter-Versteifungselement 15 aufweist. Die Düsenwanne 1a ist in einer Rahmenanordnung 16a, 16b, 16c aus Stahl angeordnet und von dieser durch Feuerfeststeine 17a, 17b und keramisches Füllmaterial 18a, 18b thermisch und elektrisch isoliert.

### Beispiel 1:

Die Düsenwanne 1 aus Figuren 1 bis 8 wird mit einer Bodenplatte 5 hergestellt, die sich aus einer Platte 5b aus der Legierung Ptlr30 und einer Beschichtung 5c aus Platin auf der dem Wanneninnenraum abgewandten Seite der Bodenplatte 5 zusammensetzt. Dabei ist die Beschichtung 5c aus einem Platinblech in einer Dicke von 0,1 mm gebildet und auf die Platte 5b walzplattiert. Die Seitenwände 2a, 2d, die Lochplatte 7 und die Düsen 6, 6b sind aus Platin gebildet. Die Seitenwände 2b, 2c, die Stromanschlüsse 4a, 4b sowie die Wannen-Versteifungselemente 10 sind aus oxiddispersionsgehärtetem Platin gebildet. Diese Düsenwanne wird bei Temperaturen bis zu 1250°C eingesetzt.

### Beispiel 2:

Die Düsenwanne 1 aus Figuren 1 bis 8 wird mit einer Bodenplatte 5 hergestellt, die sich aus einer Platte 5b aus der Legierung PtRu5 und einer Beschichtung 5c aus Platin auf der dem Wanneninnenraum abgewandten Seite der Bodenplatte 5 zusammensetzt. Zwischen der Platte 5b und der Beschichtung 5c befindet sich eine oxidische Zwischenschicht von 100µm Dicke aus Al₂O₃, die auf die Platte 5b aus PtRu5 mittels einer Schlichte aufgetragen wurde. Die Seitenwände 2a, 2d und die Düsen 6, 6a, 6b sind aus Platin gebildet, wobei die Düsen 6, 6b an ihrem Außendurchmesser gasdicht mit der Beschichtung 5c verschweißt sind. Der Raum zwischen Platte 5b und Beschichtung 5c, in welchem sich die oxidische Zwischenschicht befindet, ist evakuiert. Die Seitenwände 2b, 2c, die Stromanschlüsse 4a, 4b sowie die Wannen-Versteifungselemente 10 sind aus oxiddispersionsgehärtetem Platin gebildet. Die Lochplatte 7 ist aus PtRu5 gebildet. Die Lochplatte 7 ist während des Glasfaserziehprozesses vollständig von der Glasschmelze bedeckt, somit ist hier keine Beschichtung aus Platin erforderlich. Diese Düsenwanne wird bei Temperaturen oberhalb 1250°C eingesetzt.

### Beispiel 3:

Die Düsenwanne 1 aus Figuren 1 bis 8 wird mit einer Bodenplatte 5 hergestellt, die sich aus einer Platte 5b aus der Legierung PtRu10 und einer Beschichtung 5c aus oxiddispersionsgehärtetem Platin auf der dem Wanneninnenraum abgewandten Seite der Bodenplatte 5 zusammensetzt. Zwischen der Platte 5b und der Beschichtung 5c befindet sich eine oxidische Zwischenschicht in Form eines dünnen Plättchens aus ZrO₂. Die Seitenwände 2a, 2d und die Düsen 6, 6b sind aus Platin gebildet, wobei die Düsen 6, 6b an ihrem Außendurchmesser gasdicht mit der Beschichtung 5c verschweißt sind. Der Raum zwischen Platte 5b und Beschichtung 5c, in welchem sich die oxidische Zwischenschicht befindet, ist evakuiert. Die Seitenwände 2b, 2c sowie die Stromanschlüsse 4a, 4b sind aus oxiddispersionsgehärtetem Platin gebildet. Die Lochplatte 7 sowie die Wannen-Versteifungselemente 10 sind aus PtRu5 gebildet. Die Lochplatte 7 und die Wannen-Versteifungselemente 10 sind während des Glasfaserziehprozesses vollständig von der Glasschmelze bedeckt, somit ist hier keine Beschichtung aus Platin erforderlich. Oberhalb der Lochplatte 7 befindet sich ein Behälter 14 aus Platin, in welchem ein Behälter-Versteifungselement 15 aus PtRu5 angeordnet ist. Diese Düsenwanne wird bei Temperaturen oberhalb 1250°C eingesetzt, wobei der Behälter 14 über einen Gaszuführstutzen mit Argon gespült wird, um das Abdampfen des Rutheniums aus dem unbeschichteten Behälter-Versteifungselement 15 zu verhindern.

### Beispiel 4:

Die Düsenwanne 1 aus Figuren 1 bis 8 wird mit einer Bodenplatte 5 hergestellt, die sich aus einer Platte 5b aus der Legierung Ptlr20 und einer Beschichtung 5c aus oxiddispersionsgehärtetem Platin auf der dem Wanneninnenraum abgewandten Seite der Bodenplatte 5 zusammensetzt. Zwischen der Platte 5b und der Beschichtung 5c befindet sich eine oxidische Zwischenschicht in Form eines dünnen Keramiknetzes aus Al₂O₃. Die Seitenwände 2a, 2d und die Düsen 6, 6b sind aus Platin gebildet, wobei die Düsen 6, 6b an ihrem Außendurchmesser gasdicht mit der Beschichtung 5c verschweißt sind. Der Raum zwischen der Platte 5b und der Beschichtung 5c, in welchem sich die oxidische Zwischenschicht befindet, ist evakuiert. Die Seitenwände 2b, 2c sowie die Stromanschlüsse 4a, 4b sind aus oxiddispersionsgehärtetem Platin gebildet. Die Lochplatte 7 sowie die Wannen-Versteifungselemente 10 sind aus Ptlr20 gebildet. Nachdem die Lochplatte 7 und die Wannen-Versteifungselemente 10 während des Glasfaserziehprozesses vollständig von der Glasschmelze bedeckt sind, ist hier keine Beschichtung aus Platin erforderlich. Oberhalb der Lochplatte 7 befindet sich ein Behälter 14 aus Platin, in welchem ein Behälter-Versteifungselement 15 aus PtIr20 angeordnet ist. Das PtIr20 ist allseitig mit Platin beschichtet, wobei eine oxidische Zwischenschicht in Form eines dünnen Keramiknetzes aus Al₂O₃ zwischen dem PtIr20 und der Beschichtung aus Platin vorhanden ist. Der Raum zwischen PtIr20 und Beschichtung des Behälter-Versteifungselements, in welchem sich die Zwischenschicht befindet, ist evakuiert. Diese Düsenwanne wird bei Temperaturen oberhalb 1250°C eingesetzt, wobei im Behälter 14 ein Glasgranulat und Luft vorhanden sind. Das Abdampfen des Iridiums aus dem Behälter-Versteifungselement 15 wird durch dessen Beschichtung wirkungsvoll verhindert.

## Patentansprüche

1. Düsenwanne zum Ziehen von Glasfasern, wobei die Düsenwanne eine Bodenplatte und Seitenwände aufweist, die einen Wanneninnenraum bilden, wobei auf der dem Wanneninnenraum abgewandten Seite der Seitenwände mindestens zwei Stromanschlüsse angeordnet sind, und wobei die Bodenplatte mindestens eine Bodenöffnung aufweist, die auf ihrer dem Wanneninnenraum abgewandten Seite der Bodenplatte in eine Düse mündet, **dadurch gekennzeichnet, dass** die Düsenwanne aus mindestens zwei unterschiedlichen metallischen Werkstoffen der Gruppe Platin, Platin-Iridium-Legierung, Platin-Ruthenium-Legierung und Platin-Rhodium-Legierung gebildet ist, wobei
a) die Seitenwände aus Platin oder Platin-lridium-Legierung oder Platin-Ruthenium-Legierung oder Platin-Rhodium-Legierung gebildet sind,
b) die Düse(n) aus Platin oder Platin-Rhodium-Legierung gebildet sind,
c) die Stromanschlüsse aus Platin oder Platin-Rhodium-Legierung gebildet sind,
d) die Bodenplatte aus Platin-lridium-Legierung oder Platin-Ruthenium-Legierung oder Platin-Rhodium-Legierung gebildet ist,
und dass die Seitenwände und die Bodenplatte, wenn sie aus Platin-lridium-Legierung oder Platin-Ruthenium-Legierung gebildet sind, zumindest auf ihrer dem Wanneninnenraum abgewandten Seite eine Beschichtung aus Platin oder Platin-Rhodium-Legierung aufweisen.

2. Düsenwanne nach Anspruch 1, **dadurch gekennzeichnet, dass** auf der der Bodenplatte gegenüber liegenden Seite der Düsenwanne eine den offenen Querschnitt der Düsenwanne vollständig überdeckende Lochplatte angeordnet ist, die mindestens eine Plattenöffnung aufweist, und dass die Lochplatte aus Platin, Platin-lridium-Legierung, Platin-Ruthenium-Legierung oder Platin-Rhodium-Legierung gebildet ist.

3. Düsenwanne nach Anspruch 1, **dadurch gekennzeichnet, dass** die Seitenwände, die Stromanschlüsse und die Düse(n) aus Platin gebildet sind, dass die Bodenplatte aus Platin-lridium-Legierung oder Platin-Ruthenium-Legierung gebildet ist und dass die Beschichtung der Bodenplatte aus Platin gebildet ist.

4. Düsenwanne nach Anspruch 1, **dadurch gekennzeichnet, dass** die Seitenwände aus Platin oder Platin-Rhodium-Legierung gebildet sind, dass die Düse(n) aus Platin-Rhodium-Legierung gebildet sind, dass die Bodenplatte aus Platin-lridium-Legierung oder Platin-Ruthenium-Legierung gebildet ist und dass die Beschichtung der Bodenplatte aus Platin oder Platin-Rhodium-Legierung gebildet ist.

5. Düsenwanne nach Anspruch 2, **dadurch gekennzeichnet, dass** die Seitenwände, die Stromanschlüsse und die Düse(n) aus Platin gebildet sind, dass die Bodenplatte und die Lochplatte aus Platin-lridium-Legierung gebildet sind und dass die Beschichtung der Bodenplatte aus Platin gebildet ist.

6. Düsenwanne nach Anspruch 2, **dadurch gekennzeichnet, dass** die Seitenwände, die Stromanschlüsse und die Düse(n) aus Platin gebildet sind, dass die Bodenplatte und die Lochplatte aus Platin-Ruthenium-Legierung gebildet sind und dass die Beschichtung der Bodenplatte aus Platin gebildet ist.

7. Düsenwanne nach Anspruch 2, **dadurch gekennzeichnet, dass** die Seitenwände aus Platin oder Platin-Rhodium-Legierung gebildet sind, dass die Düse(n) aus Platin-Rhodium-Legierung gebildet sind, dass die Bodenplatte und die Lochplatte aus Platin-lridium-Legierung gebildet sind und dass die Beschichtung der Bodenplatte aus Platin oder Platin-Rhodium-Legierung gebildet ist.

8. Düsenwanne nach Anspruch 2, **dadurch gekennzeichnet, dass** die Seitenwände aus Platin oder Platin-Rhodium-Legierung gebildet sind, dass die Düse(n) aus Platin-Rhodium-Legierung gebildet sind, dass die Bodenplatte und die Lochplatte aus Platin-Ruthenium-Legierung gebildet sind und dass die Beschichtung der Bodenplatte aus Platin oder Platin-Rhodium-Legierung gebildet ist.

9. Düsenwanne nach Anspruch 2, **dadurch gekennzeichnet, dass** die Stromanschlüsse aus Platin gebildet sind und dass die Seitenwände, die Düse(n), die Bodenplatte und die Lochplatte aus Platin-Rhodium-Legierung gebildet sind.

10. Düsenwanne nach einem der Ansprüche 1 bis 8, **dadurch gekennzeichnet, dass** zwischen der Beschichtung und der Platin-lridium-Legierung oder der Beschichtung und der Platin-Ruthenium-Legierung eine oxidkeramische Zwischenschicht angeordnet ist.

11. Düsenwanne nach einem der Ansprüche 1 bis 10, **dadurch gekennzeichnet, dass** das Platin und/oder die Platin-lridium-Legierung und/oder die Platin-Ruthenium-Legierung und/oder die Platin-Rhodium-Legierung oxiddispersionsgehärtet ist.

12. Düsenwanne nach einem der Ansprüche 1 bis 11, **dadurch gekennzeichnet, dass** die Seitenwände an ihrem der Bodenplatte entgegengesetzten Ende einen um die Düsenwanne umlaufenden Flansch aufweisen.

13. Düsenwanne nach Anspruch 12, **dadurch gekennzeichnet, dass** der Flansch aus Platin, Platin-lridium-Legierung, Platin-Ruthenium-Legierung oder Platin-Rhodium-Legierung gebildet ist, und dass der Flansch, wenn er aus Platin-lridium-Legierung oder Platin-Ruthenium-Legierung gebildet ist, eine Beschichtung aus Platin oder Platin-Rhodium-Legierung aufweist.

14. Düsenwanne nach Anspruch 13, **dadurch gekennzeichnet, dass** das Platin oder die Platin-lridium-Legierung oder die Platin-Ruthenium-Legierung oder die Platin-Rhodium-Legierung oxiddispersionsgehärtet ist.

15. Düsenwanne nach einem der Ansprüche 13 bis 14, **dadurch gekennzeichnet, dass** der Flansch aus dem gleichen Werkstoff gebildet ist, wie die Seitenwände.

16. Düsenwanne nach einem der Ansprüche 1 bis 15, **dadurch gekennzeichnet, dass** die Düsenwanne einen rechteckigen Querschnitt mit vier Seitenwänden aufweist.

17. Düsenwanne nach Anspruch 16, **dadurch gekennzeichnet, dass** die Düsenwanne an zwei sich gegenüberliegenden Seitenwänden der vier Seitenwände jeweils mindestens einen Stromanschluss aufweist.

18. Düsenwanne nach Anspruch 17, **dadurch gekennzeichnet, dass** die zwei sich gegenüberliegenden Seitenwände der vier Seitenwände aus oxiddispersionsgehärtetem Platin gebildet sind.

19. Düsenwanne nach einem der Ansprüche 1 bis 18, **dadurch gekennzeichnet, dass** die Düsenwanne an ihrer der Bodenplatte gegenüber liegenden Seite einen Behälter aufweist, wobei ein Behälterinnenraum mit dem Wanneninnenraum in Verbindung steht.

20. Düsenwanne nach Anspruch 19, **dadurch gekennzeichnet, dass** im Behälterinnenraum mindestens ein Behälter-Versteifungselement zur Stabilisierung der Geometrie des Behälters angeordnet ist.

21. Düsenwanne nach Anspruch 20, **dadurch gekennzeichnet, dass** das mindestens eine Behälter-Versteifungselement aus Platin, Platin-Rhodium-Legierung, Platin-lridium-Legierung, Platin-lridium-Legierung inklusive einer Beschichtung aus Platin, Platin-lridium-Legierung inklusive einer Beschichtung aus Platin-Rhodium-Legierung, Platin-Ruthenium-Legierung, Platin-Ruthenium-Legierung inklusive einer Beschichtung aus Platin oder aus einer Platin-Ruthenium-Legierung inklusive einer Beschichtung aus Platin-Rhodium-Legierung gebildet ist.

22. Düsenwanne nach Anspruch 21, **dadurch gekennzeichnet, dass** zwischen der Beschichtung und der Platin-lridium-Legierung oder der Platin-Ruthenium-Legierung eine oxidkeramische Zwischenschicht angeordnet ist.

23. Düsenwanne nach einem der Ansprüche 1 bis 22, **dadurch gekennzeichnet, dass** im Wanneninnenraum mindestens ein Wannen-Versteifungselement zur Stabilisierung der Geometrie der Düsenwanne angeordnet ist.

24. Düsenwanne nach Anspruch 23, **dadurch gekennzeichnet, dass** das mindestens eine Wannen-Versteifungselement aus Platin, Platin-Rhodium-Legierung, Platin-Iridium-Legierung, Platin-lridium-Legierung inklusive einer Beschichtung aus Platin, Platin-lridium-Legierung inklusive einer Beschichtung aus Platin-Rhodium-Legierung, Platin-Ruthenium-Legierung, Platin-Ruthenium-Legierung inklusive einer Beschichtung aus Platin oder aus Platin-Ruthenium-Legierung inklusive einer Beschichtung aus Platin-Rhodium-Legierung gebildet ist.

25. Düsenwanne nach Anspruch 24, **dadurch gekennzeichnet, dass** zwischen der Beschichtung und der Platin-lridium-Legierung oder der Beschichtung und der Platin-Ruthenium-Legierung eine oxidkeramische Zwischenschicht angeordnet ist.

26. Düsenwanne nach einem der Ansprüche 21 bis 22 oder 24 bis 25, **dadurch gekennzeichnet, dass** das Platin, die Platin-Rhodium-Legierung, die Platin-Iridium-Legierung, die Platin-Ruthenium-Legierung und/oder die Beschichtung oxiddispersionsgehärtet ist.

27. Düsenwanne nach einem der Ansprüche 1 bis 26, **dadurch gekennzeichnet, dass** die Bodenplatte 400 bis 6000 Bodenöffnungen aufweist, die jeweils in eine Düse münden.

28. Düsenwanne nach einem der Ansprüche 1 bis 27, **dadurch gekennzeichnet, dass** die Platin-lridium-Legierung die Zusammensetzung Ptlr20 oder Ptlr30 aufweist.

29. Düsenwanne nach einem der Ansprüche 1 bis 28, **dadurch gekennzeichnet, dass** die Platin-Ruthenium-Legierung die Zusammensetzung PtRu5 oder PtRu10 aufweist.

30. Düsenwanne nach einem der Ansprüche 1 bis 29, **dadurch gekennzeichnet, dass** die Platin-Rhodium-Legierung die Zusammensetzung PtRh10 oder PtRh20 oder PtRh24 aufweist.

31. Düsenwanne nach einem der Ansprüche 19 bis 30, **dadurch gekennzeichnet, dass** an dem Behälter ein Gaszuführstutzen angeordnet ist.

32. Düsenwanne nach Anspruch 31, **dadurch gekennzeichnet, dass** der Gaszuführstutzen aus dem gleichen Material wie der Behälter gebildet ist.

33. Düsenwanne nach einem der Ansprüche 1 bis 9, **dadurch gekennzeichnet, dass** die Beschichtung durch Walzplattieren eines Bleches, Diffusionsschweißen eines Bleches, Punktschweißen eines Bleches, thermisches Spritzen oder galvanische Abscheidung gebildet ist.

34. Düsenwanne nach Anspruch 10, 22 oder 25, **dadurch gekennzeichnet, dass** die Beschichtung durch thermisches Spritzen oder Anbringen eines Bleches gebildet ist.

35. Düsenwanne nach einem der Ansprüche 1 bis 10, **dadurch gekennzeichnet, dass** die Beschichtung der Bodenplatte durch ein Blech gebildet ist, wobei das Blech auf der dem Wanneninnenraum abgewandten Seite der Bodenplatte mit dem Umfang der Düse(n) gasdicht verbunden ist.

36. Düsenwanne nach einem der Ansprüche 10, 22 oder 25, **dadurch gekennzeichnet, dass** der Raum zwischen der Platin-lridium-Legierung und der Beschichtung oder der Platin-Ruthenium-Legierung und der Beschichtung, in welchem sich die oxidische Zwischenschicht befindet, evakuiert ist.

37. Düsenwanne nach einem der Ansprüche 33 oder 35, **dadurch gekennzeichnet, dass** das Blech eine Dicke im Bereich von 0,1 bis 0,5 mm aufweist.

38. Düsenwanne nach einem der Ansprüche 10, 22 oder 25, **dadurch gekennzeichnet, dass** die oxidkeramische Zwischenschicht eine Dicke im Bereich von 10 bis 100 µm aufweist.

39. Düsenwanne nach einem der Ansprüche 10, 22 oder 25, **dadurch gekennzeichnet, dass** die oxidkeramische Zwischenschicht aus ZrO₂ und/oder Al₂O₃ und/oder Y₂O₃ gebildet ist.

40. Düsenwanne nach einem der Ansprüche 10, 22 oder 25, **dadurch gekennzeichnet, dass** die oxidkeramische Zwischenschicht ein selbsttragendes Bauteil ist.

41. Düsenwanne nach Anspruch 40, **dadurch gekennzeichnet, dass** das selbsttragende Bauteil ein Keramikplättchen, ein Keramiknetz, eine keramische Fasermatte oder eine Keramikfolie ist.

42. Düsenwanne nach einem der Ansprüche 10, 22 oder 25, **dadurch gekennzeichnet, dass** die oxidkeramische Zwischenschicht durch Aufdampfen, Aufsputtern, thermisches Spritzen oder den Auftrag einer keramischen Schlichte gebildet ist.

43. Düsenwanne nach Anspruch 42, **dadurch gekennzeichnet, dass** die Zwischenschicht auf die Platin-Iridium-Legierung oder die Platin-Ruthenium-Legierung aufgebracht ist.

44. Düsenwanne nach Anspruch 42, **dadurch gekennzeichnet, dass** die Zwischenschicht auf der Beschichtung angeordnet ist, wobei die Beschichtung aus einem Blech gebildet ist.

45. Verwendung einer Düsenwanne nach einem der Ansprüche 3 bis 8 zum Ziehen von Glasfasern bei einer Temperatur der Düsenwanne von ≤ 1250°C.

46. Verwendung einer Düsenwanne nach einem der Ansprüche 9 bis 10 zum Ziehen von Glasfasern bei einer Temperatur der Düsenwanne von > 1250°C.

47. Verwendung einer Düsenwanne nach einem der Ansprüche 1 bis 18 für ein Direktschmelzverfahren zum Ziehen von Glasfasern, bei welchem eine Glasschmelze in die Düsenwanne geleitet wird, die Viskosität der Glasschmelze in der Düsenwanne mittels einer elektrischen Widerstandsbeheizung der Düsenwanne kontrolliert und eingestellt wird, die Glasschmelze durch die Düse(n) tritt und zu Glasfaser gezogen wird.

48. Verwendung einer Düsenwanne nach einem der Ansprüche 19 bis 22 für ein Indirektschmelzverfahren zum Ziehen von Glasfasern, bei welchem eine Glasschmelze zu einem Glasgranulat verarbeitet wird, das Glasgranulat in den Behälterinnenraum gefüllt und dem Wanneninnenraum zugeführt wird, das Glasgranulat mittels einer elektrischen Widerstandsbeheizung der Düsenwanne erschmolzen und die Viskosität der Glasschmelze kontrolliert und eingestellt wird, die Glasschmelze durch die Düse(n) tritt und zu Glasfaser gezogen wird.
